# EUROPÄISCHE PATENTSCHRIFT

(11) **EP 2 580 745 B1**
(45) Veröffentlichungstag und Bekanntmachung des Hinweises auf die Patenterteilung: **16.08.2017**
(21) Anmeldenummer: 11720398.4
(22) Anmeldetag: 18.05.2011
(51) Int. Cl.: G07D 7/04

(54) **VERFAHREN UND VORRICHTUNG ZUR PRÜFUNG VON WERTDOKUMENTEN**
METHOD AND APPARATUS FOR CHECKING VALUE DOCUMENTS
PROCÉDÉ ET DISPOSITIF DE CONTRÔLE DE DOCUMENTS DE VALEUR

(30) Priorität: 09.06.2010 DE 102010023097
(43) Veröffentlichungstag der Anmeldung: 17.04.2013
(73) Patentinhaber: Giesecke+Devrient Currency Technology GmbH, 81677 München (DE)
(72) Erfinder: SCHÜTZMANN, Jürgen, 85276 Pfaffenhofen (DE); PAUL, Elisabeth, 83064 Raubling (DE)
(86) Internationale Anmeldenummer: PCT/EP2011/002488
(87) Internationale Veröffentlichungsnummer: WO 2011/154088

(56) Entgegenhaltungen:
- EP-A1- 0 428 779
- WO-A1-2009/090676
- DE-A1- 2 834 287
- DE-A1-102004 049 999

## Beschreibung

Die Erfindung betrifft ein Verfahren und eine Vorrichtung zur Prüfung von Wertdokumenten, wie z.B. Banknoten, Schecks, Karten, Tickets, Coupons.

Aus dem Stand der Technik, z.B. aus der DE2834287 A1, ist es bekannt, Wertdokumente mit Sicherheitselementen, etwa Sicherheitsstreifen oder auch Sicherheitsfäden, auszustatten, die magnetisches Material enthalten. Das magnetische Material kann dabei entweder durchgehend oder nur bereichsweise, zum Beispiel in Form einer Kodierung auf das Sicherheitselement aufgebracht sein. Zur magnetischen Kodierung eines Sicherheitselements dient beispielsweise eine bestimmte Abfolge von magnetischen und nichtmagnetischen Bereichen, die für das Wertdokument charakteristisch ist. Außerdem ist es bekannt, verschiedene magnetische Materialien für eine Magnetkodierung zu verwenden, z.B. mit unterschiedlichen Koerzitivfeldstärken. Bei den bisher bekannten magnetischen Kodierungen werden zwei verschieden koerzitive magnetische Materialien eingesetzt, aus welchen zwei Sorten von Magnetbereichen gebildet werden, die auf dem Sicherheitselement angeordnet sind.

Ferner ist es aus der EP0428779A1 bekannt, Banknoten mit Sicherheitsfäden, die eine Magnetkodierung aus verschieden koerzitiven Materialien aufweisen, maschinell zu prüfen. Dabei werden die Banknoten parallel zur Längsrichtung des Sicherheitselements transportiert und durchlaufen nacheinander zuerst ein starkes Magnetfeld parallel zur Transportrichtung, das sowohl die hoch- als auch die niederkoerzitiven Magnetbereiche entlang der Transportrichtung magnetisiert. Die verbleibende Magnetisierung wird mittels eines induktiven Magnetdetektors, der parallel zur Transportrichtung empfindlich ist, geprüft. Anschließend durchlaufen die Banknoten ein schwächeres Magnetfeld senkrecht zur Transportrichtung, das nur die niederkoerzitiven Magnetbereiche senkrecht zur Transportrichtung ausrichtet, während die hochkoerzitiven Magnetbereiche in Transportrichtung magnetisiert bleiben. Erneut wird die verbleibende Magnetisierung mittels eines induktiven Magnetdetektors, der parallel zur Transportrichtung empfindlich ist, geprüft. Mit dem ersten induktiven Magnetdetektors werden dabei die hoch-und die niederkoerzitiven Magnetbereiche detektiert und mit dem zweiten induktiven Magnetdetektor werden nur die hochkoerzitiven Magnetbereiche detektiert. Falls das Sicherheitselement, wie in der WO2009090676A1, jedoch auch kombinierte Magnetbereiche enthält, die beide verschieden koerzitiven Magnetmaterialien enthalten, so dass die verschieden koerzitiven Magnetmaterialien zugleich in den Detektionsbereich des Magnetdetektors gelangen, wird eine Überlagerung der Magnetsignale der verschieden koerzitiven Magnetmaterialien detektiert. Die kombinierten Magnetbereiche liefern dabei ein reduziertes Magnetsignal, dessen Signalhub zwischen dem der hochkoerzitiven und dem der niederkoerzitiven Magnetbereiche liegt. Nachteilig ist bei diesem Verfahren, dass diese kombinierten Magnetbereiche nur schwer von den hochkoerzitiven und von den niederkoerzitiven Magnetbereichen unterscheidbar sind. Desweiteren ist es nachteilig, für das Ummagnetisieren der niederkoerzitiven Magnetbereiche ein Magnetfeld zu verwenden, das parallel zur Transportebene und senkrecht zur Transportrichtung des Wertdokuments orientiert ist. Denn mit Hilfe üblicher Magnete lassen sich so orientierte Magnetfelder nur mit relativ geringer Magnetfeldstärke realisieren.

Der Erfindung liegt daher die Aufgabe zugrunde, die Prüfung der Wertdokumente so durchzuführen, dass die hochkoerzitiven, die niederkoerzitiven und die kombinierten Magnetbereiche jeweils zuverlässig voneinander unterschieden werden können.

Diese Aufgabe wird durch die Gegenstände der unabhängigen Ansprüche gelöst. In davon abhängigen Ansprüchen sind vorteilhafte Weiterbildungen und Ausgestaltungen der Erfindung angegeben.

Das zu prüfende Wertdokument weist ein Sicherheitselement mit mehreren Magnetbereichen auf. Zu den Magnetbereichen gehören mindestens ein hochkoerzitiver Magnetbereich aus einem hochkoerzitiven Magnetmaterial mit einer ersten Koerzitivfeldstärke und mindestens ein niederkoerzitiver Magnetbereich aus einem niederkoerzitiven Magnetmaterial mit einer zweiten Koerzitivfeldstärke, die geringer ist als die erste Koerzitivfeldstärke, und gegebenenfalls mindestens ein kombinierter Magnetbereich, der sowohl das hochkoerzitive als auch das niederkoerzitive Magnetmaterial aufweist. Der mindestens eine kombinierte Magnetbereich enthält sowohl das hochkoerzitive als auch das niederkoerzitive Magnetmaterial. Das hochkoerzitive und das niederkoerzitive Magnetmaterial des kombinierten Magnetbereichs sind z.B. aufeinander angeordnet. Alternativ weist der kombinierte Magnetbereich das hochkoerzitive und das niederkoerzitive Magnetmaterial in Form einer Mischung auf.

Vorzugsweise ist der mindestens eine kombinierte Magnetbereich so ausgebildet, dass das hochkoerzitive Magnetmaterial des kombinierten Magnetbereichs und das niederkoerzitive Magnetmaterial des kombinierten Magnetbereichs im Wesentlichen die gleiche remanente Flussdichte aufweisen. Der kombinierte Magnetbereich enthält insbesondere die gleiche Menge des hochkoerzitiven und des niederkoerzitiven Magnetmaterials. Die hoch- und niederkoerzitiven Anteile des mindestens einen kombinierten Magnetbereichs können aber auch voneinander abweichen, z.B. aufgrund von unvermeidlichen Drucktoleranzen bei der Herstellung der Magnetbereiche. Bevorzugt sind auch die remanenten Flussdichten des hochkoerzitiven Magnetbereichs und des niederkoerzitiven Magnetbereichs gleich. Zum Beispiel beträgt die remanente Flussdichte des hochkoerzitiven Magnetmaterials des kombinierten Magnetbereichs die Hälfte der remanenten Flussdichte des hochkoerzitiven Magnetbereichs. Und die remanente Flussdichte des niederkoerzitiven Magnetmaterials des kombinierten Magnetbereichs beträgt die Hälfte der remanenten Flussdichte des niederkoerzitiven Magnetbereichs. Der mindestens eine kombinierte Magnetbereich kann eine resultierende remanente Flussdichte aufweisen, die gleich der remanenten Flussdichte des hochkoerzitiven Magnetbereichs und gleich der remanenten Flussdichte des niederkoerzitiven Magnetbereichs ist. Alternativ können die remanenten Flussdichten des hochkoerzitiven, des niederkoerzitiven und des kombinierten Magnetbereichs aber auch verschieden sein.

Zur Prüfung des Wertdokuments werden folgende Schritte durchgeführt: Das Wertdokument bzw. das Sicherheitselement des Wertdokuments wird durch ein erstes Magnetfeld magnetisiert, dessen Magnetfeldstärke größer ist als die erste und als die zweite Koerzitivfeldstärke. Die Magnetisierung des hochkoerzitiven Magnetmaterials (sowohl des hochkoerzitiven als auch des kombinierten Magnetbereichs) und die Magnetisierung des niederkoerzitiven Magnetmaterials (sowohl des niederkoerzitiven als auch des kombinierten Magnetbereichs) werden dabei einheitlich in eine erste Magnetisierungsrichtung ausgerichtet. Anschließend wird das Wertdokument bzw. das Sicherheitselement durch ein zweites Magnetfeld magnetisiert, dessen Magnetfeldstärke kleiner ist als die erste Koerzitivfeldstärke, aber größer ist als die zweite Koerzitivfeldstärke. Das zweite Magnetfeld ist so orientiert, dass die Magnetisierung des niederkoerzitiven Magnetmaterials (sowohl des niederkoerzitiven als auch des kombinierten Magnetbereichs) antiparallel zur ersten Magnetisierungsrichtung ausgerichtet ist. Die Magnetisierung des hochkoerzitiven Magnetmaterials (sowohl des hochkoerzitiven als auch des kombinierten Magnetbereichs) bleibt bei der zweiten Magnetisierung unverändert in der ersten Magnetisierungsrichtung ausgerichtet.

Insbesondere ist das zweite Magnetfeld antiparallel zum ersten Magnetfeld orientiert. Dies ist besonders vorteilhaft, denn das zweite Magnetfeld kann in diesem Fall durch eine ähnliche Magnetisierungseinrichtung bereit gestellt werden wie das erste Magnetfeld, z.B. durch ähnliche Magnete. Vorteilhaft lässt sich dann einfach mittels üblicher Magnete eine relativ große Magnetfeldstärke des ersten und des zweiten Magnetfelds realisieren. Die erste Magnetisierungsrichtung ist beispielsweise parallel oder antiparallel zur Transportrichtung des Wertdokuments orientiert. Sie kann aber auch anders, z.B. senkrecht zur Transportebene des Wertdokuments orientiert sein.

Nach dem ersten und zweiten Magnetisieren werden erste Magnetsignale des Sicherheitselements durch einen ersten Magnetdetektor und danach zweite Magnetsignale des Sicherheitselements durch einen zweiten Magnetdetektor detektiert. Die ersten und die zweiten Magnetsignale werden analysiert, um jeden der Magnetbereiche des Sicherheitselements entweder als einen der kombinierten Magnetbereiche zu identifizieren oder als einen der hochkoerzitiven oder niederkoerzitiven Magnetbereiche.

Da die Magnetfeldstärke des zweiten Magnetfelds geringer ist als die erste Koerzitivfeldstärke, wird das hochkoerzitive Magnetmaterial durch das zweite Magnetfeld nicht ummagnetisiert. Die Magnetisierung des niederkoerzitiven Magnetmaterials wird jedoch durch das zweite Magnetfeld antiparallel zur ersten Magnetisierungsrichtung ausgerichtet. Daher unterscheiden sich das erste Magnetsignal des mindestens einen niederkoerzitiven Magnetbereichs von dem ersten Magnetsignal des mindestens einen hochkoerzitiven Magnetbereichs. Beispielsweise ist das erste Magnetsignal des niederkoerzitiven Magnetbereichs im Vergleich zum ersten Magnetsignal des hochkoerzitiven Magnetbereichs im Wesentlichen invertiert.

Außerdem führt die antiparallele Magnetisierung des niederkoerzitiven Magnetmaterials auch dazu, dass sich jeweils das erste Magnetsignal des mindestens einen kombinierten Magnetbereichs von den ersten Magnetsignalen der hoch- und niederkoerzitiven Magnetbereiche unterscheidet. Der mindestens eine kombinierte Magnetbereich wird durch das zweite Magnetfeld so magnetisiert, dass eine resultierende Magnetisierung des mindestens einen kombinierten Magnetbereichs, die sich durch das zweite Magnetisieren ergibt, zumindest näherungsweise verschwindet. Zu diesem Zweck sind die kombinierten Magnetbereiche vorzugsweise so ausgebildet, dass das niederkoerzitive Magnetmaterial des kombinierten Magnetbereichs und das hochkoerzitive Magnetmaterial des kombinierten Magnetbereichs zumindest näherungsweise die gleiche remanente Flussdichte aufweisen. Wenn in diesem Fall das niederkoerzitive Magnetmaterial des kombinierten Magnetbereichs durch das zweite Magnetfeld antiparallel zum hochkoerzitiven Magnetmaterial des kombinierten Magnetbereichs magnetisiert wird, wird im Idealfall eine verschwindende resultierende Magnetisierung des jeweiligen kombinierten Magnetbereichs erreicht. Dadurch dass die resultierende Magnetisierung der kombinierten Magnetbereiche nahezu verschwindet, ist es möglich, die ersten Magnetsignale der hochkoerzitiven und der niederkoerzitiven Magnetbereiche sehr zuverlässig von den ersten Magnetsignalen der kombinierten Magnetbereiche zu unterscheiden. Aus dem ersten Magnetsignal des jeweiligen Magnetbereichs kann daher abgeleitet werden, ob der jeweilige Magnetbereich ein hochkoerzitiver, ein niederkoerzitiver oder ein kombinierter Magnetbereich ist.

Die genaue Form des Magnetsignals der einzelnen Magnetbereiche hängt von der Art der verwendeten Magnetdetektoren sowie von der remanenten Flussdichte und von der Länge des jeweiligen Magnetbereichs ab. Beispielsweise kann das erste und/ oder zweite Magnetsignal der hochkoerzitiven, der niederkoerzitiven und der kombinierten Magnetbereiche jeweils als Einfachpeak oder als Doppelpeak ausgebildet sein. Bei verschwindender resultierender Magnetisierung, wie sie bei den kombinierten Magnetbereichen durch das antiparallele zweite Magnetisieren erzeugt wird, weist das erste Magnetsignal des kombinierten Magnetbereichs keine ausgeprägten Peaks auf und entspricht etwa einem ersten Signaloffset des ersten Magnetsignal.

Vor dem Detektieren der zweiten Magnetsignale des Sicherheitselements wirkt ein drittes Magnetfeld auf das Sicherheitselement ein, dessen Magnetfeldstärke größer ist als die zweite Koerzitivfeldstärke. Durch das dritte Magnetfeld wird die durch das zweite Magnetfeld erzeugte Magnetisierung des niederkoerzitiven Magnetmaterials daher verändert. Das dritte Magnetfeld ist so orientiert ist, dass die Magnetisierung des niederkoerzitiven Magnetmaterials durch das dritte Magnetfeld in eine dritte Magnetisierungsrichtung ausgerichtet wird, die nicht antiparallel zur ersten Magnetisierungsrichtung orientiert ist. Damit wird erreicht, dass die Magnetisierung des niederkoerzitiven Magnetmaterials durch das dritte Magnetfeld in eine andere Richtung ausgerichtet wird als sie durch das zweite Magnetfeld ausgerichtet wurde. Durch das dritte Magnetfeld wird die Magnetisierung des niederkoerzitiven Magnetmaterials verändert, bevor die zweiten Magnetsignale detektiert werden. Das dritte Magnetfeld wirkt auf den zu detektierenden Abschnitt des Sicherheitselements vor dem Detektieren des zweiten Magnetsignals des jeweiligen Abschnitts ein, insbesondere vor und während des Detektierens des zweiten Magnetsignals des jeweiligen Abschnitts.

Die ersten Magnetsignale des Sicherheitselements werden nicht unter Einwirkung des dritten Magnetfelds detektiert. Das dritte Magnetfeld wirkt auf einen zu detektierenden Abschnitt des Sicherheitselements also erst nach dem Detektieren des ersten Magnetsignals des jeweiligen Abschnitts und vor dem Detektieren des zweiten Magnetsignals des jeweiligen Abschnitts ein. Bevorzugt werden die zweiten Magnetsignale des Sicherheitselements unter der Einwirkung des dritten Magnetfelds detektiert. Dabei wirkt das dritte Magnetfeld auf den zu detektierenden Abschnitt des Sicherheitselements nicht nur vor, sondern auch während des Detektierens des zweiten Magnetsignals des jeweiligen Abschnitts ein.

Das dritte Magnetfeld ist so orientiert ist, dass die Magnetisierung des niederkoerzitiven Magnetmaterials durch das dritte Magnetfeld in eine dritte Magnetisierungsrichtung ausgerichtet wird, die nicht antiparallel zur ersten Magnetisierungsrichtung orientiert ist. Die Magnetisierungsrichtung des dritten Magnetfelds kann dabei beliebig gewählt werden, solange sie sich von der Magnetisierungsrichtung des zweiten Magnetfelds unterscheidet. Sie kann z.B. parallel, senkrecht oder schräg zur ersten Magnetisierungsrichtung orientiert sein. In einem Ausführungsbeispiel ist die dritte Magnetisierungsrichtung gleich der ersten Magnetisierungsrichtung. In einem anderen Ausführungsbeispiel ist die dritte Magnetisierungsrichtung senkrecht zur ersten Magnetisierungsrichtung und senkrecht zu einer Transportebene des Wertdokuments orientiert.

In einigen Ausführungsbeispielen ist die Magnetfeldstärke des dritten Magnetfelds größer als die zweite Koerzitivfeldstärke, aber kleiner als die erste Koerzitivfeldstärke. In diesen Fällen wird durch das dritte Magnetfeld nur die Magnetisierung des niederkoerzitiven Magnetmaterials (sowohl des niederkoerzitiven Magnetbereichs als auch des niederkoerzitiven Anteils des kombinierten Magnetbereichs) verändert, aber nicht die Magnetisierung des hochkoerzitiven Magnetmaterials. Die Magnetisierung des hochkoerzitiven Magnetmaterials (sowohl des hochkoerzitiven Magnetbereichs als auch der hochkoerzitive Anteil des kombinierten Magnetbereichs) bleibt dann also in der ersten Magnetisierungsrichtung ausgerichtet. Durch die veränderte Magnetisierung des niederkoerzitiven Magnetmaterials und die unveränderte Magnetisierung des hochkoerzitiven Magnetmaterials erhält der kombinierte Magnetbereich eine deutliche resultierende Magnetisierung (die nicht mehr verschwindet). Im Gegensatz zum ersten Magnetsignal, erzeugt der kombinierte Magnetbereich daher ein deutliches zweites Magnetsignal.

Alternativ dazu kann die Magnetfeldstärke des dritten Magnetfelds auch größer sein als die erste und als die zweite Koerzitivfeldstärke, so dass sie beide Koerzitivfeldstärken übersteigt. In diesen Fällen wird durch das dritte Magnetfeld sowohl die Magnetisierung des niederkoerzitiven als auch die Magnetisierung des hochkoerzitiven Magnetmaterials verändert. Durch die veränderte Magnetisierung des niederkoerzitiven Magnetmaterials und die veränderte Magnetisierung des hochkoerzitiven Magnetmaterials erhält der kombinierte Magnetbereich daher wiederum eine deutliche resultierende Magnetisierung (die nicht mehr verschwindet). Im Gegensatz zum ersten Magnetsignal, erzeugt der kombinierte Magnetbereich daher auch in diesem Fall ein deutliches zweites Magnetsignal.

Jeder Abschnitt des Sicherheitselements, in dem der zweite Magnetdetektor ein deutliches zweites Magnetsignal detektiert, wird als ein (hochkoerzitiver, niederkoerzitiver oder kombinierter) Magnetbereich des Sicherheitselements identifiziert. Diejenigen Abschnitte des Sicherheitselements, von denen zwar ein deutliches zweites Magnetsignal detektiert wird, die von denen der erste Magnetdetektor jedoch ein nahezu verschwindendes erstes Magnetsignal detektiert, werden als kombinierte Magnetbereiche identifiziert.

Die hochkoerzitiven und die niederkoerzitiven Magnetbereiche erzeugen jeweils deutliche erste und deutliche zweite Magnetsignale und lassen sich anhand ihrer Signalform und/ oder mit Hilfe eines oder mehrerer Schwellenvergleiche oder mittels anderer Methoden voneinander unterscheiden. Da die Magnetsignale der hoch- und niederkoerzitven Magnetbereiche, je nach Art des verwendeten Magnetdetektors, verschieden ausgebildet sein können, hängt auch die Entscheidung, ob ein Magnetbereich als hochkoerzitiver oder als niederkoerzitiver Magnetbereich identifiziert wird, von der Art des Magnetdetektors ab. Bei manchen Magnetdetektoren ist das erste Magnetsignal eines hochkoerzitiven Magnetbereiche als positiver Einfachpeak ausgebildet und das erste Magnetsignal eines niederkoerzitiven Magnetbereichs als negativer Einfachpeak. In diesem Fall kann jeder Magnetbereich, dessen erstes Magnetsignal die obere Schwelle überschreitet, als hochkoerzitiver Magnetbereich identifiziert werden und jeder Magnetbereich, dessen erstes Magnetsignal die untere Schwelle unterschreitet, als niederkoerzitiver Magnetbereich. Bei anderen Magnetdetektoren ist das erste Magnetsignal der hochkoerzitiven und der niederkoerzitiven Magnetbereiche jeweils als Doppelpeak ausgebildet, wobei der Doppelpeak des niederkoerzitiven Magnetbereichs invers zum Doppelpeak des hochkoerzitiven Magnetbereichs ausgebildet ist. Zur Unterscheidung der hochkoerzitiven von den niederkoerzitiven Magnetbereichen kann z.B. die Signalform der ersten Magnetsignale analysiert werden.

Zum Identifizieren der Magnetbereiche kann z.B. eine Signalverarbeitung der ersten und zweiten Magnetsignale durchgeführt werden, die zwei Schwellen verwendet, mit denen das jeweilige erste und zweite Magnetsignal des jeweiligen Magnetbereichs verglichen wird. Das erste Magnetsignal wird mit einer ersten oberen Schwelle und mit einer ersten unteren Schwelle verglichen, die unterhalb der ersten oberen Schwelle liegt. Das zweite Magnetsignal wird mit einer zweiten oberen Schwelle und mit einer zweiten unteren Schwelle verglichen, die unterhalb der zweiten oberen Schwelle liegt.

In Bezug auf eine positive Magnetsignalamplitude bedeutet dies, dass die jeweilige obere Schwelle bei einer größeren Magnetsignalamplitude liegt als die jeweilige untere Schwelle. Die erste obere Schwelle liegt oberhalb und die erste untere Schwelle liegt unterhalb eines Signaloffsets des ersten Magnetsignals. Die zweite obere Schwelle liegt oberhalb und die zweite untere Schwelle liegt unterhalb eines Signaloffsets des zweiten Magnetsignals.

Beim Identifizieren der Magnetbereiche wird ein Magnetbereich, dessen zweites Magnetsignal eine zweite obere Schwelle überschreitet und/ oder eine zweite untere Schwelle unterschreitet, und dessen erstes Magnetsignal weder eine erste obere Schwelle überschreitet noch eine erste untere Schwelle unterschreitet, als kombinierter Magnetbereich identifiziert. Ein Magnetbereich, dessen zweites Magnetsignal die zweite obere Schwelle überschreitet und/ oder die zweite untere Schwelle unterschreitet, und dessen erstes Magnetsignal die erste obere Schwelle überschreitet und/ oder die erste untere Schwelle unterschreitet, wird entweder als hochkoerzitiver oder als niederkoerzitiver Magnetbereich identifiziert. Dadurch dass die erste obere und die erste untere Schwelle auf einander gegenüberliegenden Seiten des ersten Signaloffsets angeordnet werden, führt das Vergleichen des ersten Magnetsignals mit diesen beiden Schwellen zu einer sehr zuverlässigen Unterscheidung der kombinierten Magnetbereiche von den hoch- und niederkoerzitiven Magnetbereichen. Um die Identifizierung der kombinierten Magnetbereiche weiter zu optimieren werden die erste obere und erste untere Schwelle vorzugsweise so definiert, dass die beiden Schwellen einen relativ großen Abstand voneinander aufweisen. Der Abstand beträgt z.B. mindestens 50%, vorzugsweise mindestens 75% eines mittleren Signalhubs, den das erste Magnetsignal der hochkoerzitiven und/ oder der niederkoerzitiven Magnetbereiche relativ zum Signaloffset des ersten Magnetsignals aufweist.

Zum Identifizieren der Magnetbereiche kann die Signalverarbeitung der ersten und zweiten Magnetsignale auch so durchgeführt werden, dass ein von dem jeweiligen ersten Magnetsignal abgeleitetes Signal und/ oder dass ein von dem jeweiligen zweiten Magnetsignal abgeleitetes Signal mit Schwellen verglichen werden. Zum Identifizieren kann alternativ auch ein Signal verwendet werden, das von beiden, d.h. von dem ersten und zweiten Magnetsignal abgeleitet wurde, z.B. durch eine Linearkombination oder Verhältnisbildung des ersten und zweiten Magnetsignals des jeweiligen Magnetbereichs. Das von dem detektierten ersten bzw. zweiten Magnetsignal abgeleitete Signal wird z.B. durch Bildung einer Korrelation des ersten bzw. zweiten Magnetsignals mit einem Basissignal abgeleitet, das charakteristisch ist für den jeweiligen Magnetdetektor, der das erste bzw. zweite Magnetsignal detektiert, bzw. für dessen einzelne magnetosensitive Elemente, und für das zu prüfende Sicherheitselement. Das abgeleitete Signal kann z.B. dem Maximalwert einer Korrelationskurve entsprechen, die für jede Position entlang der Längsrichtung des Sicherheitselements bestimmt wird. Es können aber auch andere Charakteristika der Korrelationskurve verwendet werden. Das abgeleitete Signal kann aber auch direkt der Maximalwert des zweiten Magnetsignals sein, den der zweite Magnetdetektor bzw. dessen einzelne magnetosensitive Elemente, an der jeweiligen Position entlang der Längsrichtung des Sicherheitselements detektiert. Das abgeleitete Signal kann auch die Fläche unter dem ersten bzw. zweiten Magnetsignal an der jeweiligen Position entlang des Sicherheitselements sein oder andere Charakteristika des ersten bzw. zweiten Magnetsignals oder Charakteristika des Signals, das von dem ersten und zweiten Magnetsignal abgeleitet wurde. Zur Identifizierung der Magnetbereiche wird dann, an Stelle des ersten und zweiten Magnetsignals selbst, das jeweilige abgeleitete Signal mit einer oberen Schwelle und einer unteren Schwelle verglichen. In Abhängigkeit des Über- bzw. Unterschreitens der beiden Schwellen durch das jeweilige erste und zweite Magnetsignal wird jeder Magnetbereich entweder als kombinierter oder als hochkoerzitiver oder als niederkoerzitiver Magnetbereich identifiziert.

Die obere und/ oder die untere Schwelle können in Abhängigkeit des ersten Magnetsignals des Sicherheitselements gewählt werden, insbesondere in Abhängigkeit eines Signalhubs des ersten Magnetsignals, den das erste Magnetsignal relativ zu seinem Signaloffset aufweist. Damit kann, quasi automatisch, z.B. auf Transportschwankungen des Wertdokuments oder auf herstellungsbedingte Schwankungen der Magnetmaterialmenge in den Magnetbereichen reagiert werden. Die obere Schwelle und/ oder die untere Schwelle kann für alle Magnetbereiche gleich gewählt sein, so dass alle zweiten Magnetsignale der Magnetbereiche mit derselben oberen und mit derselben unteren Schwelle verglichen werden. Diese kann dynamisch in Abhängigkeit des ersten Magnetsignals gewählt werden. Liegt der Signalhub der ersten Magnetsignale der Magnetbereiche des Sicherheitselements beispielsweise im Mittel relativ hoch bzw. niedrig, so wird auch die obere Schwelle entsprechend erhöht bzw. reduziert.

Die Länge der einzelnen Magnetbereiche entlang der Längsrichtung des Sicherheitselements kann z.B. aus dem Verlauf der ersten und/oder der zweiten Magnetsignale entlang der Längsrichtung des Sicherheitselements bestimmt werden oder aus dem Verlauf eines abgeleiteten Signals, das von dem von dem ersten und/ oder von dem zweiten Magnetsignal des jeweiligen Magnetbereichs abgeleitet wurde.

Vorzugsweise können durch den zweiten Magnetdetektor auch zweite Magnetsignale eines oder mehrerer weichmagnetischer Bereiche des Wertdokuments detektiert werden, die das Wertdokument außerhalb des Sicherheitselements aufweisen kann. Zum Detektieren der weichmagnetischen Bereiche, werden die zweiten Magnetsignale des Wertdokuments auch außerhalb des Sicherheitselements detektiert, und zwar unter Einwirkung des dritten Magnetfelds detektiert, das während des Detektierens des zweiten Magnetsignals des jeweiligen weichmagnetischen Bereichs auf diesen einwirkt. Die weichmagnetischen Bereiche des Wertdokuments, die außerhalb des Sicherheitselements liegen, werden anhand ihres zweiten Magnetsignals als weichmagnetische Bereiche identifiziert, z.B. durch Vergleichen des zweiten Magnetsignals mit einer oder mehreren Schwellen.

Zur Prüfung des Wertdokuments kann ein ausgewählter Bereich des Wertdokuments ortsaufgelöst auf seine magnetischen Eigenschaften überprüft werden, z.B. der Bereich des Wertdokuments, in dem das Sicherheitselement vorliegt. Zusätzlich kann, getrennt davon, auch ein weichmagnetischer Bereich des Wertdokuments ortsaufgelöst auf seine magnetischen Eigenschaften überprüft werden. Alternativ können die ersten und zweiten Magnetsignale auch über einen beide Bereiche einschließenden Bereich oder durchgehend über das gesamte Wertdokument ortsaufgelöst detektiert werden.

Die Erfindung betrifft auch eine Vorrichtung zur Prüfung eines Wertdokuments mit einem Sicherheitselement, das mindestens einen der oben genannten hochkoerzitiven und/ oder niederkoerzitiven und/ oder kombinierten Magnetbereiche aufweist. Mit Hilfe dieser Vorrichtung kann eine magnetische Kodierung des Sicherheitselements aus hochkoerzitiven, niederkoerzitiven und kombinierten Magnetbereichen zuverlässig nachgewiesen werden. Die erfindungsgemäße Vorrichtung zur Prüfung von Wertdokumenten kann als Vorrichtung zur Wertdokumentbearbeitung ausgebildet sein, in die Wertdokumente zu deren Prüfung eingegeben werden können, oder als Vorrichtung, die zum Einbauen in eine solche Vorrichtung vorgesehen ist.

Die Vorrichtung weist eine erste Magnetisierungseinrichtung zum Bereitstellen eines ersten Magnetfelds auf, das zum ersten Magnetisieren des hochkoerzitiven und des niederkoerzitiven Magnetmaterials des Sicherheitselements in eine erste Magnetisierungsrichtung ausgebildet ist. Die zum ersten Magnetisieren verwendete Magnetfeldstärke des ersten Magnetfelds ist größer als die erste Koerzitivfeldstärke des hochkoerzitiven Magnetmaterials. Außerdem weist die Vorrichtung eine zweite Magnetisierungseinrichtung zum Bereitstellen eines zweiten Magnetfelds auf, das zum zweiten Magnetisieren des hochkoerzitiven und des niederkoerzitiven Magnetmaterials des Sicherheitselements in eine zweite Magnetisierungsrichtung ausgebildet ist. Die zum zweiten Magnetisieren verwendete Magnetfeldstärke des zweiten Magnetfelds ist größer ist als die zweite Koerzitivfeldstärke des niederkoerzitiven Magnetmaterials und kleiner als die erste Koerzitivfeldstärke des hochkoerzitiven Magnetmaterials. Die zweite Magnetisierungsrichtung ist antiparallel zu einer ersten Magnetisierungsrichtung orientiert. Die erste und die zweite Magnetisierungseinrichtung können aber auch durch ein und dieselbe Magnetisierungseinrichtung gebildet werden, die sowohl das erste als auch das zweite Magnetfeld bereit stellt.

Außerdem weist die Vorrichtung einen ersten Magnetdetektor zum Detektieren von ersten Magnetsignalen des Sicherheitselements und einen zweiten Magnetdetektor zum Detektieren von zweiten Magnetsignalen des Sicherheitselements auf. Der erste und zweite Magnetdetektor sind so angeordnet, dass, bei der Prüfung des Wertdokuments, für jeden Abschnitt des Wertdokuments, das erste und das zweite Magnetsignal erst detektiert werden, nachdem das erste und zweite Magnetisieren des jeweiligen Abschnitts durchgeführt wurde. Die Vorrichtung weist ferner eine dritte Magnetisierungseinrichtung zum Bereitstellen des oben genannten dritten Magnetfelds auf, das derart ausgebildet ist, dass das dritte Magnetfeld, beim Prüfen des Wertdokuments, vor dem Detektieren der zweiten Magnetsignale auf das Sicherheitselement einwirkt. Das dritte Magnetfeld ist derart ausgebildet, dass es, bei der Prüfung des Wertdokuments, auf einen zu detektierenden Abschnitt des Sicherheitselements nach dem Detektieren des ersten Magnetsignals des jeweiligen Abschnitts und vor dem Detektieren des zweiten Magnetsignals des jeweiligen Abschnitts einwirkt. Die räumliche Ausdehnung des dritten Magnetfelds ist daher so, dass es das Sicherheitselement bereits magnetisiert, bevor dieses in den Erfassungsbereich des zweiten Magnetdetektors transportiert wird. Das dritte Magnetfeld ist bevorzugt derart ausgebildet, dass die zweiten Magnetsignale, bei der Prüfung des Wertdokuments, unter der Einwirkung des dritten Magnetfelds detektiert werden können. In diesem Fall ist das dritte Magnetfeld derart ausgebildet, dass es auf den zu detektierenden Abschnitt des Sicherheitselements vor und während des Detektierens des zweiten Magnetsignals des jeweiligen Abschnitts einwirkt.

Die dritte Magnetisierungseinrichtung besteht bevorzugt aus einem oder mehreren einseitig zum Transportweg des Wertdokuments angeordneten Permanentmagneten. Dieser mindestens eine Permanentmagnet ist auf der Seite des Transportwegs angeordnet, auf der auch der zweite Magnetdetektor angeordnet ist, wobei gegenüberliegend dazu, auf der anderen Seite des Transportwegs, kein weiteres magnetisches Material angeordnet ist. Durch den Verzicht auf weiteres magnetisches Material auf der dem zweiten Magnetdetektor gegenüberliegenden Seite werden Magnetfeldschwankungen am Ort des zweiten Magnetdetektors vermieden, die ansonsten durch mechanische Erschütterungen der Anordnung auftreten könnten. Bevorzugt sind der mindestens eine Permanentmagnet und der zweite Magnetdetektor mechanisch zueinander so fixiert, dass sie eine bauliche Einheit bilden. Zum Beispiel wird der zweite Magnetdetektor zu diesem Zweck mit dem Permanentmagneten, der das dritte Magnetfeld erzeugt, vergossen. Eine geeignete Fixierung kann aber auch durch Klebung, Verschraubung, etc. erreicht werden. Durch die mechanische Fixierung zueinander wird erreicht, dass die Relativposition zwischen dem Permanentmagnet und dem zweiten Magnetdetektor stabil bleibt und mechanische Erschütterungen keine Störungen der zweiten Magnetsignale verursachen.

Die Vorrichtung kann ferner eine Signalverarbeitungseinrichtung zum Analysieren der ersten und der zweiten Magnetsignale aufweisen. Die Signalverarbeitungseinrichtung ist dazu eingerichtet die hochkoerzitiven, niederkoerzitiven und kombinierten Magnetbereiche anhand ihrer ersten und zweiten Magnetsignale zu identifizieren und voneinander zu unterscheiden, wie oben in Bezug auf das Verfahren ausgeführt wurde. Die Signalverarbeitungseinrichtung ist dazu eingerichtet, zu ermitteln, an welchen Positionen auf dem Sicherheitselement Magnetbereiche des Sicherheitselements lokalisiert sind, und diese Magnetbereiche zu identifizieren. Die Signalverarbeitungseinrichtung kann ein Bestandteil der Vorrichtung sein. Sie kann aber auch eine davon unabhängige Einrichtung sein, an die die ersten und zweiten Magnetsignale übertragen werden.

Der erste und/oder der zweite Magnetdetektor weisen z.B. eine bestimmte Hauptempfindlichkeitsrichtung auf. Die Hauptempfindlichkeitsrichtung des ersten und/ oder des zweiten Magnetdetektors kann parallel oder antiparallel zur ersten Magnetisierungsrichtung orientiert sein oder sie kann senkrecht zur ersten Magnetisierungsrichtung und senkrecht zur Transportebene des Wertdokuments orientiert sein. Der erste und der zweite Magnetdetektor weisen vorzugsweise die gleichen Hauptempfindlichkeitsrichtungen auf. In Bezug auf die Handhabung der Magnetdetektoren ist es besonders vorteilhaft, für den ersten und zweiten Magnetdetektor zwei baugleiche Magnetdetektoren zu verwenden. Das dritte Magnetfeld ist vorzugsweise im Wesentlichen senkrecht zu einer Hauptempfindlichkeitsrichtung des zweiten Magnetdetektors orientiert. Der erste und zweite Magnetdetektor können als Sensorzeilen ausgebildet sein, die jeweils eine Vielzahl von magnetosensitiven Elementen aufweisen. Der erste und zweite Magnetdetektor können aber auch als einzelne magnetosensitive Elemente ausgebildet sein. Die magnetosensitiven Elemente der Magnetdetektoren können als magnetoresistive Elemente ausgebildet sein, z.B. als konventionelle magnetoresistive Elemente, GMR-, AMR-, SdT- oder Spinventil-Elemente, es können aber auch induktive Elemente, Hallelemente etc. verwendet werden.

Nachfolgend wird die Erfindung beispielhaft anhand der folgenden Figuren erläutert. Es zeigen:
- Figur 1: Ein erstes Ausführungsbeispiel in dreidimensionaler Ansicht,
- Figur 2a,b: ein weiteres Ausführungsbeispiel, bei dem das dritte Magnetfeld senkrecht Transportebene zur des Wertdokuments orientiert ist (Fig. 2a) und schematisch die zugehörigen Magnetsignale des Sicherheitselements als Funktion der Zeit t (Fig. 2b),
- Figur 3a,b: ein weiteres Ausführungsbeispiel, bei dem das dritte Magnetfeld parallel zur Transportrichtung des Wertdokuments orientiert ist (Fig. 3a) und schematisch die zugehörigen Magnetsignale des Sicherheitselements als Funktion der Zeit t (Fig. 3b),
- Figur 4a: ein weiteres Ausführungsbeispiel mit zwei Magnetdetektoren, die senkrecht zur Transportrichtung des Sicherheitselements und senkrecht zur Längsrichtung des Sicherheitselements orientiert sind,
- Figur 4b: ein weiteres Ausführungsbeispiel mit zwei Magnetdetektoren, die schräg zur Transportrichtung des Sicherheitselements und schräg zum Sicherheitselement orientiert sind.

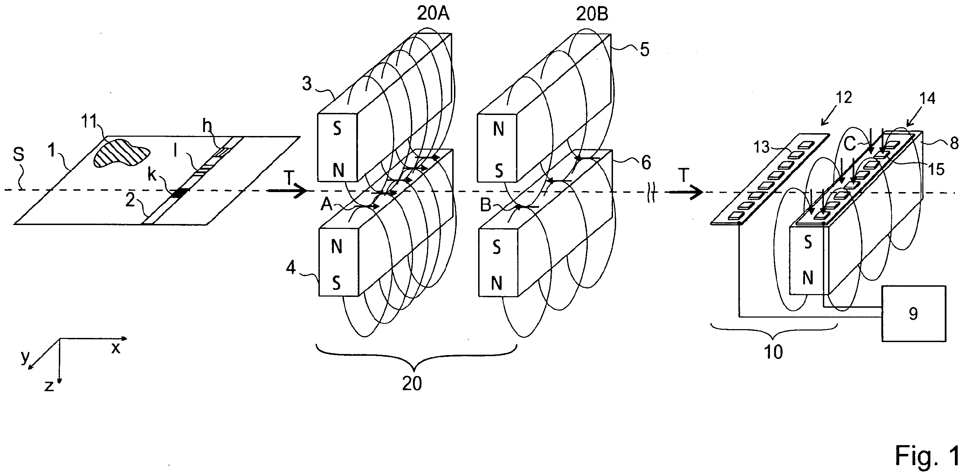

Figur 1 zeigt ein erstes Ausführungsbeispiel der erfindungsgemäßen Vorrichtung. Ein Wertdokument 1 wird entlang eines Transportwegs S zuerst an einer Anordnung 20 aus zwei Magnetisierungseinrichtungen 20A, 20B zum Bereitstellen zweier Magnetfelder A, B vorbei transportiert und danach an einem Magnetsensor 10 mit zwei Sensorzeilen 12,14. Die Magnetfelder A, B werden jeweils durch zwei einander gegenüberliegende Magnete 3, 4 bzw. 5, 6 bereit gestellt, zwischen denen das Wertdokument 1 hindurch transportiert wird. Die Pole N, S der Magnete 3,4 sind so ausgerichtet, dass sich zwischen diesen ein Magnetfeld A parallel zur Transportrichtung T ergibt und die Pole N, S der Magnete 5, 6 sind so ausgerichtet, dass sich zwischen diesen ein Magnetfeld B antiparallel zur Transportrichtung T ergibt. Zu Beginn der Anordnung der Magnete 3, 4 und der Magnete 5, 6 bildet sich bei dieser Magnetanordnung jeweils ein Magnetfeld aus, das zu einer vorausgehenden, zusätzlichen Ummagnetisierung des Sicherheitselements führen kann, was jedoch auf die nach dem Magnetfeld A bzw. nach dem Magnetfeld B resultierende Magnetisierung des Sicherheitselements keinen Einfluss hat. Die Magnetfeldstärke des Magnetisierungsabschnitts A ist größer als die Magnetfeldstärke des Magnetisierungsabschnitts B, beispielsweise um mindestens einen Faktor 1,5. Die Magnetfelder A, B können alternativ natürlich auch mit Hilfe andersartiger Magnete oder mit Hilfe von stromdurchflossenen elektrischen Leitern erzeugt werden. An Stelle zweier gegenüberliegender Magnete kann zur Bereitstellung des jeweiligen Magnetfelds A bzw. B z.B. auch ein einzelner Magnet verwendet werden, der nur auf einer Seite des vorbeitransportierten Wertdokuments 1 angeordnet ist. Die gezeigte Vorrichtung ist in einer Vorrichtung zur Wertdokumentbearbeitung enthalten, in die die Wertdokumente 1 einzeln oder stapelweise eingegeben werden, anschließend geprüft, sortiert und in der Vorrichtung zur Wertdokumentbearbeitung abgespeichert oder wieder ausgegeben werden.

Das Wertdokument 1 weist ein Sicherheitselement 2 mit einer Magnetkodierung auf. Das Sicherheitselement 2 ist z.B. als Sicherheitsfaden ausgebildet, der entlang seiner Längsrichtung einen ersten hochkoerzitiven Magnetbereich h, einen niederkoerzitiven Magnetbereich 1 und einen kombinierten Magnetbereich k enthält. Zwischen diesen Magnetbereichen h, l, k befindet sich nichtmagnetisches Material. Das hochkoerzitive und das niederkoerzitive Magnetmaterial des kombinierten Magnetbereichs k haben etwa die gleiche remanente Flussdichte. Der kombinierte Magnetbereich k enthält die beiden Magnetmaterialien aufeinander angeordnet oder als Mischung.

Das erste Magnetfeld A ist parallel zur Transportrichtung T des Wertdokuments 1 orientiert und weist eine große Magnetfeldstärke auf, die größer ist als die Koerzitivfeldstärken beider magnetischer Materialien des Sicherheitselements 2. Durch das erste Magnetfeld A wird sowohl das hochkoerzitive als auch das niederkoerzitive Magnetmaterial in eine erste Magnetisierungsrichtung ausgerichtet, die in diesem Beispiel parallel zur Transportrichtung T des Wertdokuments 1 orientiert ist (x-Richtung). Demzufolge richtet das Magnetfeld A sowohl die Magnetisierung des hochkoerzitiven Magnetbereichs h als auch die des niederkoerzitiven Magnetbereichs 1 als auch die des kombinierten Magnetbereichs k des Sicherheitselements 2 in x-Richtung aus. Das zweite Magnetfeld B ist antiparallel zur Transportrichtung T des Wertdokuments 1 orientiert und weist eine geringere Magnetfeldstärke auf, die zwischen den Koerzitivfeldstärken des hoch- und des niederkoerzitiven Magnetmaterials des Sicherheitselements 2 liegt. Das zweite Magnetfeld B magnetisiert nur das niederkoerzitive Magnetmaterial um, und zwar in eine zweite Magnetisierungsrichtung, die antiparallel zur ersten Magnetisierungsrichtung, also antiparallel zur Transportrichtung T orientiert ist (-x-Richtung). Die Magnetisierung des hochkoerzitiven Magnetmaterials bleibt von dem zweiten Magnetfeld B unbeeinflusst und daher in der ersten Magnetisierungsrichtung ausgerichtet. Demzufolge ändert das Magnetfeld B nur die Magnetisierung des niederkoerzitiven Magnetbereichs 1 und die des kombinierten Magnetbereichs k. Die Magnetisierung des niederkoerzitiven Magnetbereichs 1 wird durch das zweite Magnetfeld B antiparallel zur ersten Magnetisierungsrichtung ausgerichtet (-x-Richtung). Die Magnetisierung des kombinierten Magnetbereichs k ergibt sich aus der Summe der Magnetisierungen des hochkoerzitiven Anteils und des niederkoerzitiven Anteils des kombinierten Magnetbereichs k. Wenn diese beiden Anteile des kombinierten Magnetbereichs etwa die gleiche remanente Flussdichte aufweisen, heben sich deren Magnetisierungen etwa auf. Das Magnetfeld B bewirkt daher, dass die resultierende Magnetisierung des kombinierten Magnetbereich k nahezu verschwindet. An Stelle der Magnetfeldrichtungen aus Figur 1 ist es genauso möglich, das Magnetfeld A antiparallel zur Transportrichtung und das Magnetfeld B parallel zur Transportrichtung bereitzustellen.

Nach der ersten und zweiten Magnetisierung wird das Wertdokument 1 an dem Magnetsensor 10 vorbeitransportiert, der benachbart oder räumlich getrennt von der Anordnung 20 in der Vorrichtung zur Wertdokumentbearbeitung eingebaut sein kann. Dazwischen können z.B. Verzweigungen oder Umlenkungen des Transportwegs S vorgesehen sein. Der Magnetsensor 10 enthält zwei Sensorzeilen 12,14, die jeweils eine Vielzahl gleichartiger magnetosensitiver Elemente 13,15 aufweisen, die in einer Zeile angeordnet sind. Jedes dieser magnetosensitiven Elemente 13,15 liefert ein Magnetsignal, so dass in diesem Beispiel eine Vielzahl erster Magnetsignale M1 mit Hilfe der magnetosensitiven Elemente 13 und eine Vielzahl zweiter Magnetsignale M2 mit Hilfe der magnetosensitiven Elemente 15 detektiert werden. Jedes Element 13 der ersten Sensorzeile 12 erfasst denselben Abschnitt des vorbeitransportierten Sicherheitselements 2 wie ein dazu korrespondierendes Elemente 15 der zweiten Sensorzeile 14. Jeweils die Magnetsignale zweier miteinander korrespondierender Elemente 13,15 liefern das erste und zweite Magnetsignal eines bestimmten Abschnitt des Sicherheitselements 2.

Während des Detektierens der ersten Magnetsignale ist das Sicherheitselement 2 keinem Magnetfeld ausgesetzt. Die magnetosensitiven Elemente 15 der zweiten Sensorzeile 14 detektieren die zweiten Magnetsignale des Sicherheitselements 2 unter Einwirkung eines dritten Magnetfelds C, das vor und während des Detektierens der zweiten Magnetsignale auf das Sicherheitselement 2 einwirkt. Das dritte Magnetfeld C wird durch einen einseitig zum Transportweg S angeordneten Magneten 8 bereit gestellt und ist derart ausgedehnt, dass es das Sicherheitselement 2 bereits magnetisiert, bevor dieses in den Erfassungsbereich der zweiten Sensorzeile 14 kommt. Das Detektieren der zweiten Magnetsignale M2 unter Einwirkung des dritten Magnetfelds C hat den Vorteil, dass die zweite Sensorzeile 14 nicht nur zum Detektieren der verschiedenen Magnetbereiche h. 1, k des Sicherheitselements 2 verwendet werden kann, sondern dass diese auch Magnetsignale weichmagnetischer Bereiche 11 detektieren kann, die auf dem Wertdokument außerhalb des Sicherheitselements 2 vorhanden sein können, vgl. Figur 1. Das dritte Magnetfeld C hat eine Magnetfeldstärke, die zwischen den Koerzitivfeldstärken des hochkoerzitiven und des niederkoerzitiven Magnetmaterials liegt. Die Magnetisierung des niederkoerzitven Magnetbereichs und des niederkoerzitiven Anteils des kombinierten Magnetbereichs k werden daher in die dritte Magnetisierungsrichtung ausgerichtet, die sich von der zweiten Magnetisierungsrichtung unterscheidet. Die Magnetisierung des hochkoerzitiven Magnetbereichs h und des hochkoerzitiven Anteils des kombinierten Magnetbereichs k bleiben durch das dritte Magnetfeld C unbeeinflusst. Das dritte Magnetfeld C bewirkt insgesamt eine resultierende Magnetisierung des kombinierten Magnetbereichs k, deren Richtung sich von der zweiten Magnetisierungsrichtung unterscheidet. Im Beispiel der Figur 1 ist das dritte Magnetfeld C senkrecht zur Transportebene des Wertdokuments 1 orientiert (z-Richtung), es können aber auch andere Richtungen gewählt werden, die sich von der des zweiten Magnetfelds B unterscheiden, z.B. die y-Richtung oder andere.

Die Sensorzeilen 12,14 sind in unmittelbarer Nähe zur Transportebene des Wertdokuments 1 angeordnet. Es kann vorgesehen sein, dass die vorbeitransportierten Wertdokumente 1 die Oberfläche der Sensorzeilen 12,14 berühren, es kann aber auch ein geringer Abstand zwischen der Oberfläche der Sensorzeilen 12,14 und dem vorbeitransportierten Wertdokument 1 vorgesehen sein, z.B. ein Abstand im mm-Bereich. Die magnetosensitiven Elemente 13 bzw. 15 sind z.B. jeweils auf einer gemeinsamen Leiterplatte angeordnet (Verdrahtung der Leiterplatten nicht gezeigt), und mit einer Signalverarbeitungseinrichtung 9 verbunden, die die Magnetsignale der Elemente 13,15 weiterverarbeitet. Die Leiterplatte der Sensorzeile 14 mit den magnetosensitiven Elementen 15 und der Magnet 8 sind durch Vergießen mechanisch zueinander so fixiert, dass sie eine bauliche Einheit bilden. Die Signalverarbeitungseinrichtung 9 empfängt Magnetsignale von den beiden Sensorzeilen 12, 14 und verarbeitet und analysiert diese. Die Signalverarbeitungseinrichtung 9 kann z.B. zusammen mit den Sensorzeilen 12,14 im selben Gehäuse angeordnet sein. Über eine Schnittstelle können Daten von der Signalverarbeitungseinrichtung 9 nach außen gesendet werden, z.B. zu einer Einrichtung, die die Daten weiterverarbeitet, und/oder zu einer Anzeigeeinrichtung, die über das Ergebnis der Wertdokumentprüfung informiert.

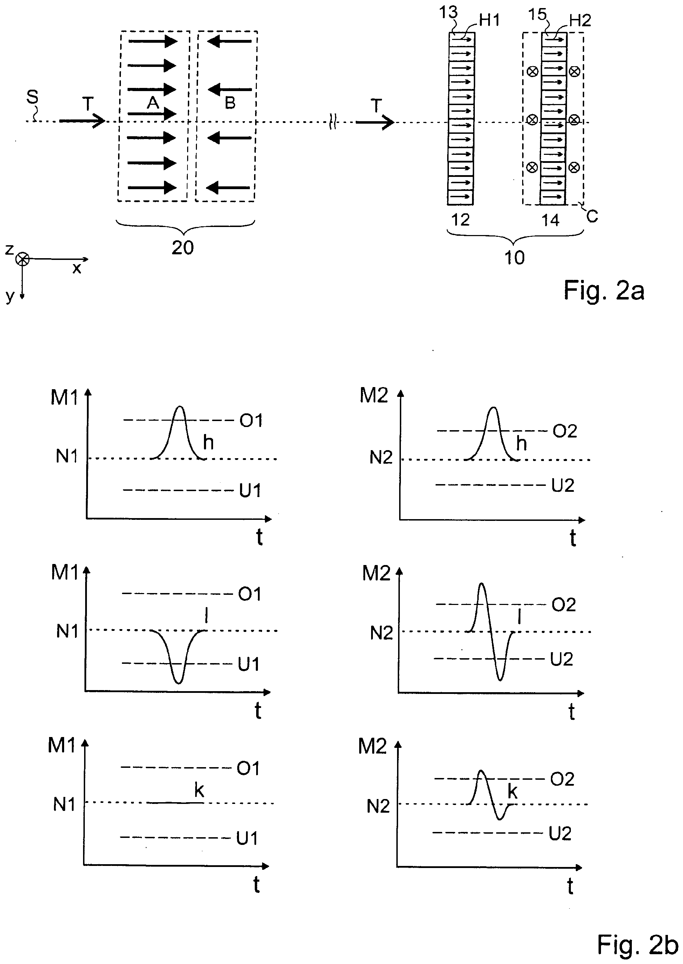

Figur 2a zeigt ein weiteres Ausführungsbeispiel in einer Draufsicht auf die Transportebene (x-y). Das Sicherheitselement 2 des Wertdokuments 1, das auf die oben beschriebene Weise durch die Magnetfelder A, B magnetisiert wurde, wird an den beiden Sensorzeilen 12,14 vorbeitransportiert, die die ersten und zweiten Magnetsignale aufnehmen. Wie in Figur 1 sind auch in diesem Ausführungsbeispiel das erste Magnetfeld A parallel zur Transportrichtung (x), das zweite Magnetfeld B antiparallel dazu (-x) und das dritte Magnetfeld C senkrecht zur Transportebene des Wertdokuments 1 orientiert (z). Die magnetosensitiven Elemente 13,15 der ersten und des zweiten Sensorzeile 12,14 weisen Hauptempfindlichkeitsrichtungen H1 und H2 auf, die in Figur 2 durch Pfeile auf den jeweiligen magnetosensitiven Elementen 13 bzw. 15 eingezeichnet sind. Beispielsweise sind die Hauptempfindlichkeitsrichtung H1, H2 der magnetosensitiven Elemente 13,15 gleich und parallel zum Magnetfeld A orientiert. Die magnetosensitiven Elemente 13 detektieren erste Magnetsignale M1 ohne Einwirkung eines Magnetfelds auf das Sicherheitselement. Die magnetosensitiven Elemente 15 detektieren zweite Magnetsignale M2 nach der und unter der Einwirkung des dritten Magnetfelds C auf das Sicherheitselement. Die Magnetsignale der Sensorzeilen 12, 14 werden an eine Signalverarbeitungseinrichtung weitergeleitet (nicht gezeigt), die diese weiterverarbeitet.

In Figur 2b sind die ersten und zweiten Magnetsignale M1, M2 eines hochkoerzitiven Magnetbereichs h (Figur 2b oben), eines niederkoerzitiven Magnetbereichs 1 (Figur 2b Mitte) und eines kombinierten Magnetbereichs k (Figur 2b unten) relativ zu dem jeweiligen Signaloffset N1 bzw. N2 dargestellt. Beim Vorbeitransportieren des Sicherheitselements 2 an den Sensorzeilen 12, 14 erzeugt ein hochkoerzitiver Magnetbereich h an einem magnetosensitiven Element 13 der ersten Sensorzeile 12, das mit h bezeichnete erste Magnetsignal M1 und an einem dazu korrespondierenden magnetosensitiven Element 15 der zweiten Sensorzeile 14 das mit h bezeichnete zweite Magnetsignal M2. Beide Magnetsignale sind etwa gleich und liegen oberhalb einer ersten bzw. zweiten oberen Schwelle O1, O2. Ein niederkoerzitiver Magnetbereich 1 erzeugt an einem magnetosensitiven Element 13 der ersten Sensorzeile 12 das mit 1 bezeichnete erste Magnetsignal M1, welches eine erste untere Schwelle U1 unterschreitet. Ein dazu korrespondierendes Element 15 der zweiten Sensorzeile 14 detektiert das mit 1 bezeichnete zweite Magnetsignal M2, welches sowohl die zweite obere Schwelle O2 überschreitet als auch die zweite untere Schwelle U2 unterschreitet. Bereits anhand des ersten Magnetsignals M1 können daher hochkoerzitive und niederkoerzitive Magnetbereiche des Sicherheitselements 2 eindeutig voneinander unterschieden werden.

Ein kombinierter Magnetbereich k erzeugt an einem magnetosensitiven Element 13 jedoch, aufgrund der antiparallelen Ausrichtung seines hoch- und niederkoerzitiven Anteils, nur ein vernachlässigbar geringes erstes Magnetsignal M1, vgl. Figur 2b links unten. Da die Magnetisierung des kombinierten Magnetbereichs k durch das dritte Magnetfeld C verändert wird, erzeugt dieser an einem magnetosensitiven Element 15 der zweiten Sensorzeile 14 aber ein deutliches zweites Magnetsignal M2, das die zweite obere Schwelle 02 übersteigt, vgl. Figur 2b rechts unten. Das Vorliegen eines kombinierten Magnetbereichs k kann also daran erkannt werden, dass in einem Abschnitt entlang des Sicherheitselements 2 zwar ein deutliches zweites Magnetsignal M2 detektiert wird, aber das erste Magnetsignal M1 in diesem Abschnitt sehr gering ist, z.B. keine der beiden ersten Schwellen U1, O1 erreicht. Damit kann ein kombinierter Magnetbereich k eindeutig von den hoch- und niederkoerzitiven Bereichen des Sicherheitselements unterschieden werden.

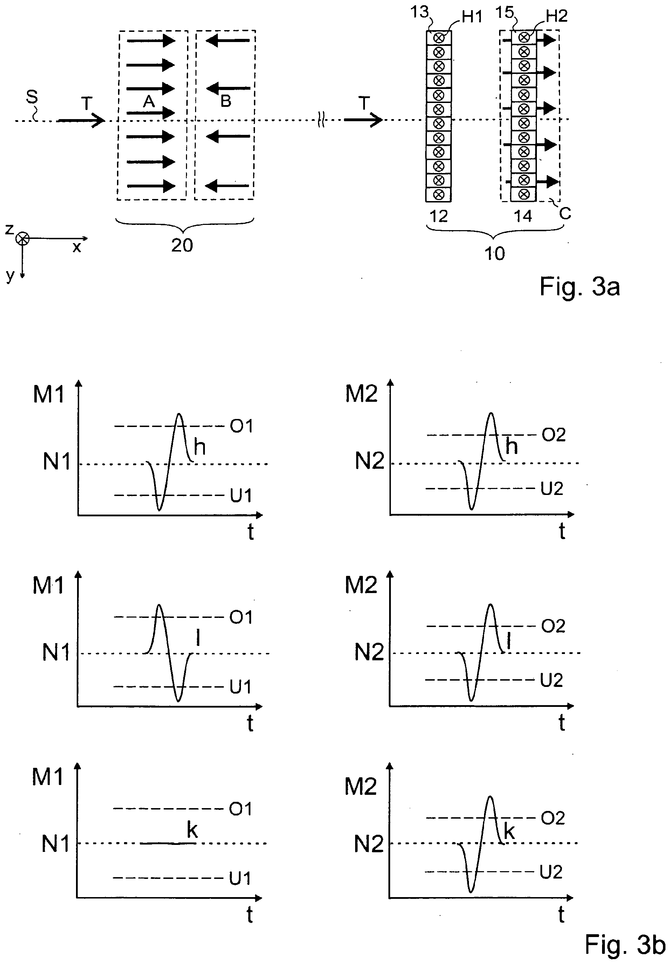

Figur 3a zeigt ein weiteres Ausführungsbeispiel mit Magnetfeldern A, B entsprechend Figur 2a. Der erste und zweite Magnetdetektor bestehen in diesem Beispiel je aus einer Sensorzeile 12 bzw. 14, deren magnetosensitive Elemente 13,15 Hauptempfindlichkeitsrichtungen H1, H2 haben, die senkrecht zur Transportebene des Wertdokuments 1 orientiert sind (z-Richtung).

Die Richtung des dritten Magnetfelds C ist in diesem Beispiel parallel zur Transportrichtung T des Wertdokuments 1 orientiert. Der Magnet zur Bereitstellung des dritten Magnetfelds kann z.B. ein einseitig zum Transportweg S angeordneter Hufeisenmagnet sein, in dessen Symmetrieebene die Sensorzeile 14 positioniert ist. Die Magnetsignale der Sensorzeilen 12,14 werden an eine Signalverarbeitungseinrichtung weitergeleitet (nicht gezeigt), die die ersten und zweiten Magnetsignale weiterverarbeitet. Im Vergleich zum Beispiel aus Figur 2a ergeben sich, aufgrund der veränderten Hauptempfindlichkeitsrichtungen H1, H2 und der veränderten Richtung des dritten Magnetfelds C, auch andere erste und zweite Magnetsignale M1, M2, vgl. Figur 3b. Das erste und zweite Magnetsignal eines hochkoerzitiven Magnetbereichs h überschreiten beide die jeweilige obere Schwelle O1 bzw. 02 und unterschreiten beiden die jeweilige untere Schwelle U1 bzw. U2, vgl. Figur 3b oben. Ein niederkoerzitiver Magnetbereich 1 liefert ebenfalls erste und zweite Magnetsignale, die beide obere Schwellen O1 bzw. O2 überschreiten und beide unters U1 bzw. U2 unterschreiten. Während die zweiten Magnetsignale M2 des hoch- und niederkoerzitiven Magnetbereichs h, l etwa gleich sind, weist das erste Magnetsignal M1 des niederkoerzitiven Magnetbereichs 1 eine dazu inverse Signalform auf, vgl. Figur 3b Mitte links. Der niederkoerzitive Magnetbereich 1 kann daher anhand der Signalform seines ersten Magnetsignals M1 von den hochkoerzitiven Magnetbereichen h unterschieden werden. Ein kombinierter Magnetbereich k erzeugt, aufgrund der antiparallelen Ausrichtung seines hoch- und niederkoerzitiven Anteils, wiederum nur ein vernachlässigbar geringes erstes Magnetsignal M1, vgl. Figur 3b links unten. Da auch in diesem Beispiel die Magnetisierung des kombinierten Magnetbereichs k durch das dritte Magnetfeld C verändert wird, erzeugt dieser aber ein deutliches zweites Magnetsignal M2, das die zweite obere Schwelle O2 überschreitet und die zweite untere Schwelle unterschreitet, vgl. Figur 3b rechts unten. Das Vorliegen eines kombinierten Magnetbereichs k kann also auch in diesem Beispiel daran erkannt werden, dass in einem Abschnitt entlang des Sicherheitselements 2 zwar ein deutliches zweites Magnetsignal M2 detektiert wird, aber das erste Magnetsignal M1 in diesem Abschnitt sehr gering ist, z.B. keine der beiden ersten Schwellen U1, O1 erreicht.

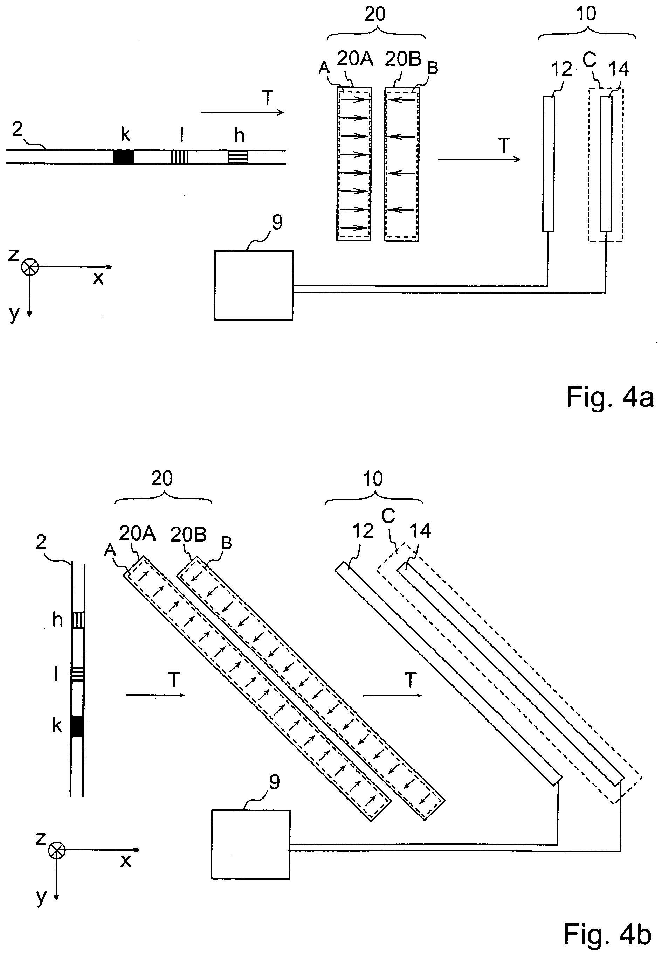

In Figur 4a ist ein weiteres Ausführungsbeispiel einer Vorrichtung zur Prüfung eines Wertdokuments 1 skizziert, bei der ein Wertdokument (nicht gezeigt), das ein Sicherheitselement 2 enthält, entlang einer Transportrichtung T an der Vorrichtung vorbei transportiert wird. Die Vorrichtung ist zur Prüfung eines Sicherheitselements 2 ausgebildet, dessen Längsrichtung parallel zur Transportrichtung T des Wertdokuments verläuft. Die Vorrichtung weist eine Anordnung 20 aus zwei Magnetisierungseinrichtungen 20A, 20B auf, die ein erstes Magnetfeld A parallel und ein zweites Magnetfeld B antiparallel zur Transportrichtung T des Wertdokuments bereit stellen. Die Vorrichtung enthält außerdem einen ersten Magnetdetektor 12, und einen zweiten Magnetdetektor 14, die, in Transportrichtung T betrachtet, beide nach den Magnetisierungseinrichtungen 20A, 20B angeordnet sind. Die beiden Magnetdetektoren 12,14 sind senkrecht zu Längsrichtung des Sicherheitselements 2 orientiert und besitzen jeweils nur ein einzelnes magnetoensitives Element, das zumindest zum Detektieren von Magnetfeldern parallel und antiparallel zur Transportrichtung T ausgebildet ist. Wie in den vorherigen Ausführungsbeispielen detektiert der erste Magnetdetektor 12 erste Magnetsignale M1 ohne Einwirkung eines Magnetfelds und der zweite Magnetdetektor 14 detektiert zweite Magnetsignale M2 nach und unter der Einwirkung eines dritten Magnetfelds C auf das Sicherheitselement 2. Die Vorrichtung weist außerdem eine Signalverarbeitungseinrichtung 9 auf, die mit dem ersten und dem zweiten Magnetdetektor 12, 24 verbunden ist. Im Gegensatz zu den vorhergehenden Beispielen werden die ersten Magnetsignale M1 wie auch die zweiten Magnetsignale M2 der verschiedenen Magnetbereiche h, l, k des Sicherheitselements 2 in diesem Beispiel jeweils zeitlich nacheinander detektiert. Je nach Richtung des dritten Magnetfelds C und je nach Empfindlichkeitsrichtung der Magnetdetektoren 12,14, können sich dabei erste und zweite Magnetsignale ergeben, die mit denen der Figuren 2b bzw. 3b vergleichbar sind und analog dazu ausgewertet werden können.

Figur 4b zeigt ein weiteres Ausführungsbeispiel, das weitgehend dem Ausführungsbeispiel der Figur 4a entspricht. Im Unterschied dazu sind bei diesem Ausführungsbeispiel die Magnetdetektoren 12, 24 und die Magnetisierungseinrichtungen 20A, 20B aber schräg zur Transportrichtung T des Sicherheitselements 2 orientiert. Durch die Schrägstellung kann eine räumliche Auflösung auch ohne den Einsatz aufwendiger Sensorzeilen erreicht werden. Die beiden magnetosensitiven Elemente der Magnetdetektoren 12, 24 detektieren die ersten und die zweiten Magnetsignale der verschiedenen Magnetbereiche h, l, k, analog zum Beispiel der Figur 4a, jeweils zeitlich nacheinander.

## Patentansprüche

1. Verfahren zur Prüfung eines Wertdokuments (1), das ein Sicherheitselement (2) mit mehreren Magnetbereichen (h, l, k) aufweist, wobei die mehreren Magnetbereiche des Sicherheitselements mindestens einen hochkoerzitiven Magnetbereich (h) aufweisen, der ein hochkoerzitives Magnetmaterial mit einer ersten Koerzitivfeldstärke enthält, und mindestens einen niederkoerzitiven Magnetbereich (1), der ein niederkoerzitives Magnetmaterial mit einer zweiten Koerzitivfeldstärke enthält, die geringer ist als die erste Koerzitivfeldstärke, und mindestens einen kombinierten Magnetbereich (k), der sowohl das hochkoerzitive als auch das niederkoerzitive Magnetmaterial enthält, wobei bei dem Verfahren folgende Schritte durchgeführt werden:
- Erstes Magnetisieren des Sicherheitselements (2) durch ein erstes Magnetfeld (A), dessen Magnetfeldstärke größer ist als die erste Koerzitivfeldstärke, so dass die Magnetisierung des hochkoerzitiven Magnetmaterials und die Magnetisierung des niederkoerzitiven Magnetmaterials in eine erste Magnetisierungsrichtung ausgerichtet werden,
- zweites Magnetisieren des Sicherheitselements (2) durch ein zweites Magnetfeld (B), dessen Magnetfeldstärke kleiner ist als die erste Koerzitivfeldstärke, aber größer ist als die zweite Koerzitivfeldstärke, wobei das zweite Magnetfeld (B) so orientiert ist, dass die Magnetisierung des niederkoerzitiven Magnetmaterials durch das zweite Magnetisieren antiparallel zur ersten Magnetisierungsrichtung ausgerichtet wird,
- Detektieren von ersten Magnetsignalen (M1) des Sicherheitselements (2) durch einen ersten Magnetdetektor (12), und
- Detektieren von zweiten Magnetsignalen (M2) des Sicherheitselements (2) durch einen zweiten Magnetdetektor (14), wobei vor dem Detektieren der zweiten Magnetsignale (M2) ein drittes Magnetfeld (C) auf das Sicherheitselement einwirkt, wobei die Magnetfeldstärke des dritten Magnetfelds (C) größer ist als die zweite Koerzitivfeldstärke und wobei das dritte Magnetfeld (C) so orientiert ist, dass die Magnetisierung des niederkoerzitiven Magnetmaterials durch das dritte Magnetfeld (C) in eine dritte Magnetisierungsrichtung ausgerichtet wird, die nicht antiparallel zur ersten Magnetisierungsrichtung orientiert ist.

2. Verfahren nach Anspruch 1, **dadurch gekennzeichnet, dass** die zweiten Magnetsignale (M2) des Sicherheitselements unter der Einwirkung des dritten Magnetfelds (C) detektiert werden.

3. Verfahren nach einem der vorhergehenden Ansprüche, **dadurch gekennzeichnet, dass** durch den zweiten Magnetdetektor (14) auch zweite Magnetsignale (M2) eines oder mehrerer weichmagnetischer Bereiche (11) des Wertdokuments (1) detektiert werden, die außerhalb des Sicherheitselements (2) angeordnet sind, wobei, während des Detektierens des zweiten Magnetsignals (M2) des jeweiligen weichmagnetischen Bereichs (11), das dritte Magnetfeld (C) auf den weichmagnetischen Bereich (11) einwirkt.

4. Verfahren nach einem der vorhergehenden Ansprüche, **dadurch gekennzeichnet, dass** der mindestens eine kombinierte Magnetbereich (k) durch das zweite Magnetfeld (B) so magnetisiert wird, dass eine resultierende Magnetisierung des mindestens einen kombinierten Magnetbereichs (k), die sich durch das zweite Magnetisieren ergibt, zumindest näherungsweise verschwindet.

5. Verfahren nach einem der vorhergehenden Ansprüche, **dadurch gekennzeichnet, dass** der mindestens eine kombinierte Magnetbereich (k) so ausgebildet ist, dass das hochkoerzitive Magnetmaterial des kombinierten Magnetbereichs (k) und das niederkoerzitive Magnetmaterial des kombinierten Magnetbereichs (k) im Wesentlichen die gleiche remanente Flussdichte aufweisen.

6. Verfahren nach einem der vorhergehenden Ansprüche, **dadurch gekennzeichnet, dass** ein Magnetbereich, dessen zweites Magnetsignal (M2) eine zweite obere Schwelle (02) überschreitet und/oder eine zweite untere Schwelle (U2) unterschreitet, und dessen erstes Magnetsignal (M1) weder eine erste obere Schwelle (O1) überschreitet noch eine erste untere Schwelle (U1) unterschreitet, als kombinierter Magnetbereich (k) identifiziert wird.

7. Verfahren nach einem der vorhergehenden Ansprüche, **dadurch gekennzeichnet, dass** ein Magnetbereich, dessen zweites Magnetsignal (M2) die zweite obere Schwelle (O2) überschreitet und/oder die zweite untere Schwelle (U2) unterschreitet, und dessen erstes Magnetsignal (M1) die erste obere Schwelle (O1) überschreitet und/oder die erste untere Schwelle (U1) unterschreitet, entweder als hochkoerzitiver (h) oder als niederkoerzitiver Magnetbereich (1) identifiziert wird.

8. Verfahren nach einem der Ansprüche 6 oder 7, **dadurch gekennzeichnet, dass** das erste Magnetsignal (M1) des Sicherheitselements (2) einen ersten Signaloffset (N1) aufweist und dass die erste obere Schwelle (O1) oberhalb des ersten Signaloffsets (N1) liegt und die erste untere Schwelle (U1) unterhalb des ersten Signaloffsets (N1) liegt.

9. Vorrichtung zur Prüfung eines Wertdokuments (1), das ein Sicherheitselement (2) mit hochkoerzitivem Magnetmaterial einer ersten Koerzitivfeldstärke und mit niederkoerzitivem Magnetmaterial einer zweiten Koerzitivfeldstärke aufweist, wobei die Vorrichtung entlang einer Transportrichtung (T) des Wertdokuments nacheinander umfasst:
- eine erste Magnetisierungseinrichtung (3,4, 20A) zum Bereitstellen eines ersten Magnetfelds (A), das zum ersten Magnetisieren des hochkoerzitiven und des niederkoerzitiven Magnetmaterials in eine erste Magnetisierungsrichtung ausgebildet ist, wobei die zum ersten Magnetisieren verwendete Magnetfeldstärke größer ist als die erste Koerzitivfeldstärke, und
- eine zweite Magnetisierungseinrichtung (5, 6, 20B) zum Bereitstellen eines zweiten Magnetfelds (B), das zum zweiten Magnetisieren des niederkoerzitiven Magnetmaterials in eine zweite Magnetisierungsrichtung ausgebildet ist, die antiparallel zur ersten Magnetisierungsrichtung orientiert ist, wobei die zum zweiten Magnetisieren verwendete Magnetfeldstärke kleiner ist als die erste Koerzitivfeldstärke, aber größer ist als die zweite Koerzitivfeldstärke, und
- einen ersten Magnetdetektor (12) zum Detektieren von ersten Magnetsignalen (M1) des Sicherheitselements (2), und
- einen zweiten Magnetdetektor (14) zum Detektieren von zweiten Magnetsignalen (M2) des Sicherheitselements (2),
wobei die Vorrichtung eine dritte Magnetisierungseinrichtung (8) zum Bereitstellen eines dritten Magnetfelds (C) aufweist, das derart ausgebildet ist, dass das dritte Magnetfeld, bei der Prüfung des Wertdokuments, vor dem Detektieren der zweiten Magnetsignale (M2) auf das Sicherheitselement einwirkt, wobei die Magnetfeldstärke des dritten Magnetfelds (C) größer ist als die zweite Koerzitivfeldstärke und wobei das dritte Magnetfeld (C) so orientiert ist, dass die Magnetisierung des niederkoerzitiven Magnetmaterials durch das dritte Magnetfeld (C) in eine dritte Magnetisierungsrichtung ausgerichtet wird, die nicht antiparallel zur ersten Magnetisierungsrichtung orientiert ist.

10. Vorrichtung nach Anspruch 9, **dadurch gekennzeichnet, dass** das dritte Magnetfeld (C) derart ausgebildet ist, dass es, bei der Prüfung des Wertdokuments, auf einen zu detektierenden Abschnitt des Sicherheitselements (2) nach dem Detektieren des ersten Magnetsignals (M1) des jeweiligen Abschnitts und vor dem Detektieren des zweiten Magnetsignals (M2) des jeweiligen Abschnitts einwirkt

11. Vorrichtung nach Anspruch 10, **dadurch gekennzeichnet, dass** das dritte Magnetfeld (C) derart ausgebildet ist, dass es auf den zu detektierenden Abschnitt des Sicherheitselements (2) vor und während des Detektierens des zweiten Magnetsignals (M2) des jeweiligen Abschnitts einwirkt.

12. Vorrichtung nach einem der Ansprüche 9 bis 11, **dadurch gekennzeichnet, dass** das dritte Magnetfeld (C) im Wesentlichen senkrecht zu einer Hauptempfindlichkeitsrichtung (H2) des zweiten Magnetdetektors (14) orientiert ist.

13. Vorrichtung nach einem der Ansprüche 9 bis 12, **dadurch gekennzeichnet, dass** die erste Magnetisierungsrichtung parallel oder antiparallel zur Transportrichtung (T) des Wertdokuments (1) orientiert ist.

## Claims

1. A method for checking a value document (1) which has a security element (2) with several magnetic regions (h, l, k), the several magnetic regions of the security element having at least one high-coercive magnetic region (h) which contains a high-coercive magnetic material with a first coercive field strength, and at least one low-coercive magnetic region (1) which contains a low-coercive magnetic material with a second coercive field strength which is lower than the first coercive field strength, and at least one combined magnetic region (k) which contains both the high-coercive and the low-coercive magnetic material, wherein in the method the following steps are carried out:
- first magnetizing of the security element (2) by a first magnetic field (A) whose magnetic field strength is greater than the first coercive field strength, so that the magnetization of the high-coercive magnetic material and the magnetization of the low-coercive magnetic material are aligned in a first magnetization direction,
- second magnetizing of the security element (2) by a second magnetic field (B) whose magnetic field strength is lower than the first coercive field strength but is greater than the second coercive field strength, the second magnetic field (B) being oriented such that the magnetization of the low-coercive magnetic material through the second magnetizing is aligned antiparallel to the first magnetization direction,
- detecting of first magnetic signals (M1) of the security element (2) by a first magnetic detector (12), and
- detecting of second magnetic signals (M2) of the security element (2) by a second magnetic detector (14), wherein before the detection of the second magnetic signals (M2) a third magnetic field (C) acts on the security element, wherein the magnetic field strength of the third magnetic field (C) is greater than the second coercive field strength and wherein the third magnetic field (C) is oriented such that the magnetization of the low-coercive magnetic material is aligned by the third magnetic field (C) in a third magnetization direction which is not oriented antiparallel to the first magnetization direction.

2. The method according to claim 1, **characterized in that** the second magnetic signals (M2) of the security element are detected under the action of the third magnetic field (C).

3. The method according to any of the preceding claims, **characterized in that** by the second magnetic detector (14) also second magnetic signals (M2) of one or several soft-magnetic regions (11) of the value document (1) are detected, which are disposed outside the security element (2), the third magnetic field (C) acting on the soft-magnetic region (11) during the detection of the second magnetic signal (M2) of the respective soft-magnetic region (11).

4. The method according to any of the preceding claims, **characterized in that** the at least one combined magnetic region (k) is magnetized by the second magnetic field (B) such that a resulting magnetization of the at least one combined magnetic region (k), which arises from the second magnetizing, at least approximatively vanishes.

5. The method according to any of the preceding claims, **characterized in that** the at least one combined magnetic region (k) is configured such that the high-coercive magnetic material of the combined magnetic region (k) and the low-coercive magnetic material of the combined magnetic region (k) have substantially the same remanent flux density.

6. The method according to any of the preceding claims, **characterized in that** a magnetic region whose second magnetic signal (M2) exceeds a second upper threshold (02) and/or undershoots a second lower threshold (U2), and whose first magnetic signal (M1) neither exceeds a first upper threshold (O1) nor undershoots a first lower threshold (U1), is identified as combined magnetic region (k).

7. The method according to any of the preceding claims, **characterized in that** a magnetic region whose second magnetic signal (M2) exceeds the second upper threshold (O2) and/or undershoots the second lower threshold (U2), and whose first magnetic signal (M1) exceeds the first upper threshold (O1) and/or undershoots the first lower threshold (U1), is identified either as high-coercive (h) or as low-coercive magnetic region (1).

8. The method according to either of claims 6 or 7, **characterized in that** the first magnetic signal (M1) of the security element (2) has a first signal offset (N1) and that the first upper threshold (O1) lies above the first signal offset (N1) and the first lower threshold (U1) lies below the first signal offset (N1).

9. An apparatus for checking a document of value (1) which has a security element (2) with high-coercive magnetic material of a first coercive field strength and with low-coercive magnetic material of a second coercive field strength, wherein the apparatus comprises successively along a transport direction (T) of the value document:
- a first magnetization device (3, 4, 20A) for making available a first magnetic field (A) which is configured for a first magnetizing of the high-coercive and the low-coercive magnetic material in a first magnetization direction, the magnetic field strength employed for the first magnetizing being greater than the first coercive field strength, and
- a second magnetization device (5, 6, 20B) for making available a second magnetic field (B) which is configured for a second magnetizing of the low-coercive magnetic material in a second magnetization direction which is oriented antiparallel to the first magnetization direction, the magnetic field strength employed for the second magnetizing being lower than the first coercive field strength, but greater than the second coercive field strength, and
- a first magnetic detector (12) for detecting first magnetic signals (M1) of the security element (2), and
- a second magnetic detector (14) for detecting second magnetic signals (M2) of the security element (2),
wherein the apparatus has a third magnetization device (8) for making available a third magnetic field (C) which is configured such that the third magnetic field, upon checking of the value document, acts on the security element before the detection of the second magnetic signals (M2), wherein the magnetic field strength of the third magnetic field (C) is greater than the second coercive field strength and wherein the third magnetic field (C) is oriented such that the magnetization of the low-coercive magnetic material is aligned by the third magnetic field (C) in a third magnetization direction which is not oriented antiparallel to the first magnetization direction.

10. The apparatus according to claim 9, **characterized in that** the third magnetic field (C) is configured such that, upon checking of the value document, it acts on a to-be-detected section of the security element (2), after the detection of the first magnetic signal (M1) of the respective section and before the detection of the second magnetic signal (M2) of the respective section.

11. The apparatus according to claim 10, **characterized in that** the third magnetic field (C) is configured such that it acts on the section of the security element (2) to be detected, before and during the detection of the second magnetic signal (M2) of the respective section.

12. The apparatus according to any of claims 9 to 11, **characterized in that** the third magnetic field (C) is oriented substantially perpendicular to a main sensitivity direction (H2) of the second magnetic detector (14).

13. The apparatus according to any of claims 9 to 12, **characterized in that** the first magnetization direction is oriented parallel or antiparallel to the transport direction (T) of the value document (1).

## Revendications

1. Procédé de vérification d'un document de valeur (1) doté d'un élément de sécurité (2) présentant plusieurs zones magnétiques (h, l, k), les plusieurs zones magnétiques de l'élément de sécurité comportant au moins une zone magnétique (h) hautement coercitive qui contient un matériau magnétique hautement coercitif présentant une première intensité de champ coercitif, et au moins une zone magnétique (1) faiblement coercitive qui contient un matériau magnétique faiblement coercitif présentant une deuxième intensité de champ coercitif inférieure à la première intensité de champ coercitif, et au moins une zone magnétique (k) combinée qui contient tant le matériau magnétique hautement coercitif que le matériau magnétique faiblement coercitif, cependant que, dans le procédé, les étapes suivantes sont exécutées :
- Première magnétisation de l'élément de sécurité (2) par un premier champ magnétique (A) dont l'intensité de champ magnétique est supérieure à la première intensité de champ coercitif, de telle sorte que la magnétisation du matériau magnétique hautement coercitif et la magnétisation du matériau magnétique faiblement coercitif sont alignées dans une première direction de magnétisation,
- deuxième magnétisation de l'élément de sécurité (2) par un deuxième champ magnétique (B) dont l'intensité de champ magnétique est inférieure à la première intensité de champ coercitif mais supérieure à la deuxième intensité de champ coercitif, le deuxième champ magnétique (B) étant orienté de telle façon que la magnétisation du matériau magnétique faiblement coercitif par la deuxième magnétisation est alignée de manière antiparallèle à la première direction de magnétisation,
- détection de premiers signaux magnétiques (M1) de l'élément de sécurité (2) par un premier détecteur magnétique (12), et
- détection de deuxièmes signaux magnétiques (M2) de l'élément de sécurité (2) par un deuxième détecteur magnétique (14), cependant que, avant la détection des deuxièmes signaux magnétiques (M2), un troisième champ magnétique (C) agit sur l'élément de sécurité, cependant que l'intensité de champ magnétique du troisième champ magnétique (C) est supérieure à la deuxième intensité de champ coercitif, et cependant que le troisième champ magnétique (C) est aligné de telle façon que la magnétisation du matériau magnétique faiblement coercitif par le troisième champ magnétique (C) est alignée dans une troisième direction de magnétisation qui n'est pas alignée de manière antiparallèle à la première direction de magnétisation.

2. Procédé selon la revendication 1, **caractérisé en ce que** les deuxièmes signaux magnétiques (M2) de l'élément de sécurité sont détectés sous l'action du troisième champ magnétique (C).

3. Procédé selon une des revendications précédentes, **caractérisé en ce que**, par le deuxième détecteur magnétique (14), aussi des deuxièmes signaux magnétiques (M2) d'une ou de plusieurs zones magnétiques douces (11) du document de valeur (1) disposées à l'extérieur de l'élément de sécurité (2) sont détectés, cependant que, pendant la détection du deuxième signal magnétique (M2) de la zone magnétique douce (11) respective, le troisième champ magnétique (C) agit sur la zone magnétique douce (11).

4. Procédé selon une des revendications précédentes, **caractérisé en ce que** la au moins une zone magnétique (k) combinée est magnétisée de telle manière par le deuxième champ magnétique (B) qu'une magnétisation résultante, engendrée par la deuxième magnétisation, de la au moins une zone magnétique (k) combinée disparaît au moins approximativement.

5. Procédé selon une des revendications précédentes, **caractérisé en ce que** la au moins une zone magnétique (k) combinée est conçue de telle façon que le matériau magnétique hautement coercitif de la zone magnétique (k) combinée et le matériau magnétique faiblement coercitif de la zone magnétique (k) combinée présentent essentiellement la même densité de flux rémanente.

6. Procédé selon une des revendications précédentes, **caractérisé en ce qu'**une zone magnétique dont le deuxième signal magnétique (M2) dépasse un deuxième seuil supérieur (02) et/ou sous-dépasse un deuxième seuil inférieur (U2) et dont le premier signal magnétique (M1) ne dépasse pas un premier seuil supérieur (O1) et/ou ne sous-dépasse pas non plus un premier seuil inférieur (U1) est identifiée comme étant une zone magnétique (k) combinée.

7. Procédé selon une des revendications précédentes, **caractérisé en ce qu'**une zone magnétique dont le deuxième signal magnétique (M2) dépasse le deuxième seuil supérieur (02) et/ou sous-dépasse le deuxième seuil inférieur (U2) et dont le premier signal magnétique (M1) dépasse le premier seuil supérieur (01) et/ou sous-dépasse le premier seuil inférieur (U1) est identifiée comme étant soit une zone magnétique (h) hautement coercitive, soit comme étant une zone magnétique (1) faiblement coercitive.

8. Procédé selon une des revendications 6 ou 7, **caractérisé en ce que** le premier signal magnétique (M1) de l'élément de sécurité (2) comporte un premier signal offset (N1) et **en ce que** le premier seuil supérieur (O1) se situe au-dessus du premier signal offset (N1) et que le premier seuil inférieur (U1) se situe au-dessous du premier signal offset (N1).

9. Dispositif de vérification d'un document de valeur (1) doté d'un élément de sécurité (2) comportant du matériau magnétique hautement coercitif d'une première intensité de champ coercitif et du matériau magnétique faiblement coercitif d'une deuxième intensité de champ coercitif, le dispositif comprenant successivement, le long d'une direction de transport (T) du document de valeur :
- un premier équipement de magnétisation (3, 4, 20A) pour la mise à disposition d'un premier champ magnétique (A) conçu pour la première magnétisation du matériau magnétique hautement coercitif et du matériau magnétique faiblement coercitif dans une première direction de magnétisation, l'intensité de champ magnétique utilisée pour la première magnétisation étant supérieure à la première intensité de champ coercitif, et
- un deuxième équipement de magnétisation (5, 6, 20B) pour la mise à disposition d'un deuxième champ magnétique (B) conçu pour la deuxième magnétisation du matériau magnétique faiblement coercitif dans une deuxième direction de magnétisation qui est orientée de manière antiparallèle à la première direction de magnétisation, cependant que l'intensité de champ magnétique utilisée pour la deuxième magnétisation est inférieure à la première intensité de champ coercitif mais supérieure à la deuxième intensité de champ coercitif, et
- un premier détecteur magnétique (12) destiné à la détection de premiers signaux magnétiques (M1) de l'élément de sécurité (2), et
- un deuxième détecteur magnétique (14) destiné à la détection de deuxièmes signaux magnétiques (M2) de l'élément de sécurité (2),
cependant que le dispositif comporte un troisième équipement de magnétisation (8) pour la mise à disposition d'un troisième champ magnétique (C) conçu de telle façon que le troisième champ magnétique, lors de la vérification du document de valeur, avant la détection des deuxièmes signaux magnétiques (M2), agit sur l'élément de sécurité, cependant que l'intensité de champ magnétique du troisième champ magnétique (C) est supérieure à la deuxième intensité de champ coercitif, et cependant que le troisième champ magnétique (C) est orienté de telle façon que la magnétisation du matériau magnétique faiblement coercitif par le troisième champ magnétique (C) est alignée dans une troisième direction de magnétisation qui n'est pas antiparallèle à la première direction de magnétisation.

10. Dispositif selon la revendication 9, **caractérisé en ce que** le troisième champ magnétique (C) est conçu de telle façon que, lors de la vérification du document de valeur, c'est après la détection du premier signal magnétique (M1) de la section respective et avant la détection du deuxième signal magnétique (M2) de la section respective qu'il agit sur une section à détecter de l'élément de sécurité (2).

11. Dispositif selon la revendication 10, **caractérisé en ce que** le troisième champ magnétique (C) est conçu de telle façon que c'est avant et pendant la détection du deuxième signal magnétique (M2) de la section respective qu'il agit sur une section à détecter de l'élément de sécurité (2).

12. Dispositif selon une des revendications de 9 à 11, **caractérisé en ce que** le troisième champ magnétique (C) est orienté essentiellement perpendiculairement à une direction de sensibilité principale (H2) du deuxième détecteur magnétique (14).

13. Dispositif selon une des revendications de 9 à 12, **caractérisé en ce que** la première direction de magnétisation est orientée de manière parallèle ou antiparallèle à la direction de transport (T) du document de valeur (1).
